(19)

**Europäisches Patentamt**
**European Patent Office**
**Office européen des brevets**

(11) **EP 4 431 986 A1**

(12) **EUROPEAN PATENT APPLICATION**
published in accordance with Art. 153(4) EPC

(43) Date of publication:
**18.09.2024 Bulletin 2024/38**

(21) Application number: **22962438.2**

(22) Date of filing: **21.10.2022**

(51) International Patent Classification (IPC):
*G01T 7/00* (2006.01)    *G01T 1/167* (2006.01)
*G01T 1/202* (2006.01)    *G01T 1/36* (2006.01)

(86) International application number:
**PCT/CN2022/126553**

(87) International publication number:
**WO 2024/082251 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 CN 202211268566**

(71) Applicant: **INSTITUTE OF OCEANOGRAPHIC INSTRUMENTATION, SHANDONG ACADEMY OF SCIENCES**
Qingdao, Shandong 266000 (CN)

(72) Inventors:
• **ZHANG, Yingying**
Qingdao, Shandong 266000 (CN)

• **SHI, Yan**
Qingdao, Shandong 266000 (CN)
• **WU, Bingwei**
Qingdao, Shandong 266000 (CN)
• **FENG, Xiandong**
Qingdao, Shandong 266000 (CN)
• **YUAN, Da**
Qingdao, Shandong 266000 (CN)
• **CHENG, Yan**
Qingdao, Shandong 266000 (CN)
• **WANG, Qian**
Qingdao, Shandong 266000 (CN)

(74) Representative: **Cabinet Beau de Loménie 158, rue de l'Université 75340 Paris Cedex 07 (FR)**

(54) **SEAWATER GAMMA ENERGY SPECTRUM TEMPERATURE DRIFT CORRECTION METHOD COMBINING GAIN ADJUSTMENT AND PERIODICITY**

(57) A seawater gamma energy spectrum temperature drift correction method combining gain adjustment and periodicity, which belongs to the technical field of radionuclide measurement and comprises: before a seawater radioactivity sensor is used, on the basis of a selected natural nuclide, performing gain-channel address relationship calibration and temperature-channel address relationship calibration by employing gamma energy spectrum measurement and peak searching, and separately establishing a gain-channel address correspondence and a temperature-channel address correspondence; and after the seawater radioactivity sensor is put into use, separately executing a gain correction process and a channel address correction process in view the established gain-channel address correspondence and temperature-channel address correspondence, re-executing the gain correction process when measurement time accumulates to reach a set threshold of gain adjustment time or extreme weather is encountered such that the seawater radioactivity sensor enters a current temperature standard working state again, and then executing the channel address correction process, thus the temperature drift correction effect of the gamma energy spectrum can be improved.

Fig.3

## Description

### Technical Field

The invention belongs to the field of radioactive nuclide measurement technology, specifically relates to a seawater gamma energy spectrum temperature drift correction method combining gain adjustment and periodicity.

### Background

The radioactive content of seawater is an important indicator for evaluating the ecological environment of seawater, and it is an important basis for conducting seawater ecological environment assessment and ocean science experiments. Currently, long-term monitoring of radioactive content in seawater mainly adopts in-situ gamma energy spectrum measurement method. Among them, the seawater radioactivity sensor developed based on sodium iodide crystal detection method has become the mainstream method for monitoring radioactive content in seawater at home and abroad due to its good performance and relatively low cost.

However, the sodium iodide crystal, photomultiplier tube, and electronic components in the seawater radioactivity sensor all have temperature effects. During long-term in-situ operation at sea, they are prone to be affected by temperature changes, causing the gamma energy spectrum to produce temperature drift, which in turn brings difficulties to subsequent gamma energy spectrum analysis. Therefore, in order to ensure the accuracy and reliability of the measurement results of the seawater radioactivity sensor during long-term operation at sea, it is necessary to correct the temperature drift of the gamma energy spectrum measured by the seawater radioactivity sensor.

At present, most of the gamma energy spectrum temperature drift correction methods require the introduction of a reference source. The reference source will form a reference peak in the gamma energy spectrum, which is used as a baseline for temperature drift correction. However, the radioactive content of seawater is low-level or extremely low-level. Introducing a reference source will inevitably interfere with the actual measurement gamma energy spectrum of seawater to a certain extent, which in turn affects the accuracy of gamma energy spectrum analysis.

In the natural environment, radioactive substances are widely distributed, including natural radioactive nuclide that have existed since the Earth's origin and artificial radioactive nuclide produced by human nuclear experiments. Among them, the relative content of $^{40}K$ nuclide in potassium elements and $^{208}Tl$ nuclide in thallium elements in natural radioactive nuclide is relatively high, and they can produce relatively obvious natural feature peaks in the gamma energy spectrum. Therefore, $^{40}K$ nuclide and $^{208}Tl$ nuclide can be used to replace the reference source to correct gamma spectra with temperature drift.

### Summary

A temperature drift correction method is provided by the present invention for gamma energy spectrum obtained by a seawater radioactivity sensor, aiming to solve the problem that the existing gamma energy spectrum temperature drift correction method, which introduces a reference source, will interfere with the gamma energy spectrum and thereby affect the analysis of the gamma energy spectrum.

To address the technical issues mentioned above, the present invention adopts the following technical solution: A method for correcting temperature drift in seawater gamma energy spectrum by combining gain adjustment with periodic calibration, which includes the following steps:

prior to deploying a seawater radioactivity sensor, based on selected natural nuclide, using gamma energy spectrum measurement and peak search to perform a gain-to-channel-address correlation calibration and a temperature-to-channel-address correlation calibration, and establishing a gain-to-channel-address correlation and a temperature-to-channel-address correlation, respectively;

after the seawater radioactivity sensor is deployed, performing a gain correction process and a channel address correction process, wherein:
the gain correction process includes:

measuring a short-period gamma energy spectrum and performing peak search;

calculating an offset between the measured characteristic peak channel address of the selected natural radionuclide at the current temperature and the standard characteristic peak channel address at the current temperature, and determining a gain adjustment based on the a gain-to-channel-address correlation;

according to the gain adjustment, the gain of the seawater radioactivity sensor is adjusted to bring the seawater radioactivity sensor to a current temperature standard operating state ;

the channel address correction process includes:

during each set short period, using the seawater radioactivity sensor to measure the gamma energy spectrum of the seawater to be tested;

at the end of each short period, extracting the seawater temperature measured by the seawater radioactivity sensor and all the channel addresses $CH_T$ from the gamma energy spectrum during the short period ;

calculating the correction values for all the channel addresses $CH_{TC}$ by :

$$CH_{TC} = \frac{CH_T}{p_0 + p_1 T + p_2 T^2 + p_3 T^3};$$

wherein $p_0$, $p_1$, $p_2$, $p_3$ are calibration coefficients; T represents temperature;

storing the corrected short-period gamma energy spectrum, and sequentially accumulating it with the previously corrected short-period gamma energy spectrum in chronological order, thereby obtaining a long-period gamma energy spectrum in which the temperature drift is eliminated.

when the measurement time accumulates to reach a gain adjustment time set threshold or encounters extreme weather, re-performing the gain correction process to make the seawater radioactivity sensor re-enter the current temperature standard operating state, and then performing the channel address correction process.

In some embodiments of the present application, in the gain correction process, the offset of the channel address $\Delta CH$ can be calculated by: $\Delta CH = P_s - P_R$; the gain adjustment amount $\Delta GA$ is calculated by: $\Delta GA = -\frac{1}{k} \cdot \Delta CH$ ; where $P_s$ is the measured characteristic peak channel address of the selected natural radionuclide at the current temperature, and $P_R$ is the standard characteristic peak channel address of the selected natural nuclide at the current temperature, and the standard characteristic peak channel addresses at different temperatures are determined by the temperature-to-channel-address correlation; k is determined by the gain-to-channel-address correlation.

In some embodiments of the present application, when extracting the seawater temperature measured by the seawater radioactivity sensor at the end of each short period, the average value of the seawater temperature measured by the seawater radioactivity sensor in that short period can be used as the seawater temperature to improve the accuracy of seawater temperature measurement.

In some embodiments of the present application, the gain-to-channel-address correlation calibration includes:

placing the seawater radioactivity sensor in a water bath temperature test chamber entirely;

controlling the temperature of the temperature test chamber to stabilize the actual temperature of the measurement environment of the seawater radioactivity sensor at the reference temperature, wherein the environmental temperature during the energy calibration of the seawater radioactivity sensor;

gradually increasing or decreasing the gain of the seawater radioactivity sensor based on a predetermined gain change; at each set gain point, measuring the gamma energy spectrum separately and determining the characteristic peak channel address of the selected natural radionuclide until the gain of the sensor reaches its limit value;

based on the set gain points and corresponding characteristic peak channel addresses, establishing the gain-to-channel-address correlation and fitting out the gain-to-channel-address curve.

In some embodiments of the present invention, the gain-to-channel-address curve obtained by fitting through the gain-to-channel-address correlation is usually a straight line; the slope of the line can be denoted as k, which is used for calculating the gain adjustment amount.

In some embodiments of the present invention, multiple gamma energy spectrum measurements can be performed using the seawater radioactivity sensor at the gain point for the selected natural nuclide. The average of the channel addresses of the characteristic peak of the selected natural nuclide in multiple gamma energy spectrum measurements can be calculated to eliminate the influence of random errors.

In some embodiments of the present invention, during the gain-to-channel-address correlation calibration process, the selected natural nuclide can be the $^{40}$K nuclide present in the widely abundant potassium element in seawater.

In some embodiments of the present invention, the gain-to-channel-address curve fitted by the above gain-to-channel-address correlation calibration is usually a straight line, and the slope of the straight line can be recorded as k for calculating the aforementioned gain adjustment value.

In some embodiments of the present invention, a temperature-to-channel-address correlation calibration process can include:

placing the seawater radioactivity sensor entirely inside a water bath temperature test chamber;

adjusting the temperature of the temperature test chamber so that the actual temperature of the measurement environment of the seawater radioactivity changes in equal gradients within a preset temperature adjustment range, forming at least four temperature points and one of them is a reference temperature; the aforementioned reference temperature is the environmental temperature of the seawater radioactivity sensor during energy calibration;

performing peak search on the gamma spectra measured by the seawater radioactivity sensor at different temperatures to find the channel addresses of the characteristic peaks of the selected natural nuclide in the gamma spectra at different temperatures; and

establishing a temperature-to-channel-address correlation using the set temperature points and the corresponding channel addresses.

In some embodiments of the present invention, the calibration coefficients can be determined as follows: using the established temperature-to-channel-address correlation, substitute different temperatures and their corresponding channel addresses into a temperature correction function f(T) to calculate the calibration coefficients $p_0$, $p_1$, $p_2$, $p_3$:

$$f(T) = \frac{PE_T}{PE_R} = p_0 + p_1 T + p_2 T^2 + p_3 T^3$$

wherein $PE_R$ is the channel address of the characteristic peak of the selected natural nuclide at the reference temperature, and $PE_T$ is the channel address of the characteristic peak of the selected natural nuclide at temperature points T other than the reference temperature.

In some embodiments of the present invention, to improve the accuracy of a channel address correction algorithm, two natural nuclides can be selected when determining the aforementioned calibration coefficients. At each set temperature point, multiple gamma energy spectrum measurements can be performed using the seawater radioactivity sensor at the set temperature point, and the average channel addresses of the characteristic peaks of the two selected natural nuclide in multiple gamma energy spectrum measurements can be calculated separately. The temperature-to-channel-address correlation can be established using the average channel addresses of the characteristic peaks of the selected natural nuclide at different temperatures, and the two sets of correspondence relationships can be substituted into the temperature correction function f(T) separately to calculate two sets of calibration coefficients. The average value of the two sets of calibration coefficients can be taken as the aforementioned $p_0$, $p_1$, $p_2$, $p_3$ to improve the reasonableness of the channel address correction value calculation formula.

In some embodiments of this application, to ensure that the channel address correction algorithm can achieve accurate correction throughout the entire spectrum, when selecting two natural nuclides, one should choose one nuclide that appears earlier in the channel range of the gamma spectrum and another nuclide that appears later in the channel range. For example, for a spectrum with a range of 1-1024 channels, one natural nuclide should have an accurate channel address value of its characteristic peak at the aforementioned reference temperature before channel address 450, such as the $^{40}$K nuclide in potassium; the other natural nuclide should have an accurate channel address value of its characteristic peak at the aforementioned reference temperature after channel address 700, such as the $^{208}$Tl nuclide in thallium.

Compared with the prior art, the advantages and positive effects of the present invention are mainly includes:

The temperature drift correction method provided by the present invention for gamma energy spectrum obtained by a seawater radioactivity sensor, which uses the characteristic peaks formed by natural nuclide in the gamma spectra to determine the parameters of the gain correction algorithm through gain-to-channel-address correlation calibration and establish a gain-to-channel-address correlation. By using the peak search results of the selected natural nuclide as the basis, the gain correction algorithm calculates and adjusts the gain of the sensor to bring the sensor back to the current temperature standard working state, thereby improving the stability of the seawater radioactivity sensor.

The temperature drift correction method provided by the present invention uses the characteristic peaks formed by natural nuclide in the gamma energy spectra to determine the parameters of the channel address correction algorithm through temperature-to-channel-address correlation calibration and establish a temperature-to-channel-address correlation. During short-period correction of gamma spectra that have undergone temperature drift, the channel address correction algorithm does not need to perform peak searching on the gamma spectra that have undergone temperature drift; it only needs to obtain the seawater temperature to complete the correction of all channel addresses in the gamma spectra, making the correction process simple and fast.

The temperature drift correction method provided by the present invention does not require the introduction of a reference source, avoiding the impact on gamma energy spectrum analysis caused by the introduction of a reference source, and ensuring the accuracy and reliability of the measured spectra during long-term operation of the seawater radioactivity sensor at sea.

The temperature drift correction method provided by the present invention has a wide range of applications and can be applied to seawater radioactivity sensors based on sodium iodide crystal detection methods, as well as other types of crystals and application scenarios for radiation sensors.

After reading the detailed description of the embodiments of the present invention in conjunction with the drawings, other features and advantages of the present invention will become more apparent.

**Description of the Drawings**

Fig.1 is a process flowchart of the gain-to-channel-address correlation calibration of the seawater radioactivity sensor;

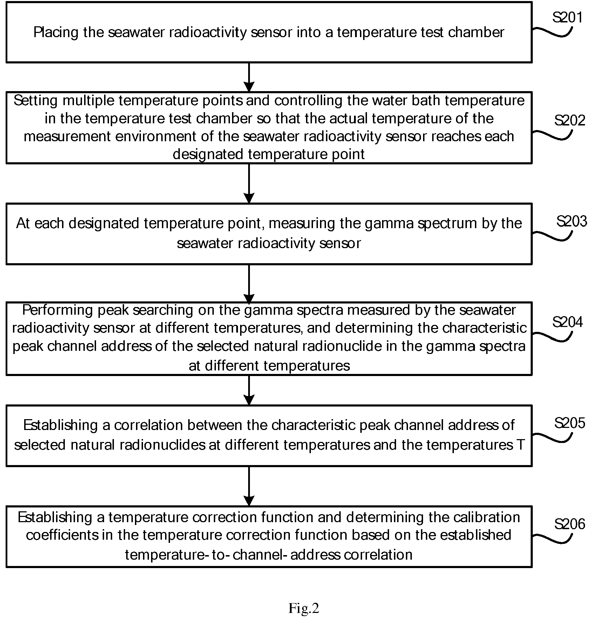

Fig.2 is a process flowchart of the temperature-to-channel-address correlation calibration of the seawater radioactivity sensor;

Fig.3 is an overall flowchart of the temperature drift correction method performed by the seawater radioactivity sensor after being put into use;

Fig.4 is a flowchart of the gain correction process shown in Fig.3;

Fig.5 is a flowchart of the channel address correction process shown in Fig.3.

**Detailed description of Embodiments**

Below is a detailed description of preferred embodiments of the present invention, accompanied by the figures.

The present embodiment provides a method for correcting temperature drift in seawater radioactivity sensor, and it comprises: utilizing characteristic peak generated by $^{40}$K nuclide, which is commonly and abundantly found in the natural environment (especially in seawater), within gamma energy spectrum measurements as the reference peak, through a gain-to-channel-address correlation calibration, to establish a gain-to-channel-address correlation; and utilizing characteristic peaks generated by $^{40}$K nuclide and $^{208}$Tl nuclide, which are commonly and abundantly found in the natural environment within gamma energy spectrum measurements as the reference peaks, through a temperature-to-channel-address correlation calibration, to establish a temperature-to-channel-address correlation. By constructing a gain correction algorithm and a channel address correction algorithm, gamma energy spectrum data collected by seawater radioactivity sensor in operation, which is affected by temperature drift, are corrected. The corrected gamma energy spectrum data is subsequently used for spectrum analysis to ensure the accuracy of radioactive nuclide monitoring results in seawater.

The seawater radioactivity sensor disclosed by the present embodiment is designed based on the sodium iodide crystal detection method. To address the gamma energy spectrum drift caused by temperature changes during sensor operation, the gain-to-channel-address correlation calibration and the temperature-to-channel-address correlation calibration are performed before deploying the seawater radioactivity sensor.

The gain-to-channel-address correlation calibration process includes: adjusting the gain of the seawater radioactivity sensor at a reference temperature (e.g., 25°C), performing gamma energy spectrum measurements at various gain settings and identifying peaks; for each gain setting, the characteristic peak channel address of selected natural radioactive nuclides in the gamma energy spectrum are determined; establishing both qualitative and quantitative relationships between the gains and the characteristic peak channel address, and then determining coefficients for the gain correction algorithm.

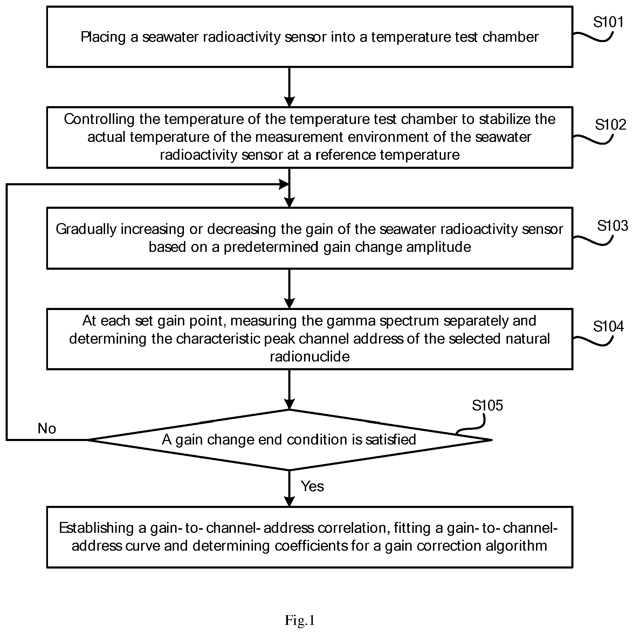

Specifically, as shown in Fig.1, the gain-to-channel-address correlation calibration process includes:

S101, placing a seawater radioactivity sensor into a temperature test chamber.

The temperature test chamber used in the present embodiment is a water bath temperature test chamber. Prior to deploying the seawater radioactivity sensor, it is fully submerged in the water bath of the temperature test chamber, and a temperature measurement module is installed inside the seawater radioactivity sensor, placed in close contact with the surface of the sodium iodide crystal, to precisely monitor the real-time temperature of the measurement environment of the seawater radioactivity sensor.

S102, controlling the temperature of the temperature test chamber to stabilize the actual temperature of the measurement environment of the seawater radioactivity sensor at the reference temperature, which is the environmental temperature during the energy calibration of the seawater radioactivity sensor, for example, 25°C. That is, performing the gain-to-channel-address correlation calibration of the seawater radioactivity sensor at the reference temperature.

For instance, the temperature of the water bath in the temperature test chamber can be precisely regulated to maintain a stable temperature reading of 25°C by the temperature measurement module, with a duration of at least 1 hour to ensure stability. Subsequently, the gain-to-channel-address correlation calibration of the seawater radioactivity sensor is performed in the measurement environment at 25°C.

5103, gradually increasing or decreasing the gain of the seawater radioactivity sensor based on a predetermined gain change amplitude to establish multiple predefined gain points.

In the present embodiment, the gain change amplitude is set to 100, and the gain of the seawater radioactivity sensor can be gradually increased from its minimum value in increments of 100 to generate various predetermined gain points; alternatively, the gain can be gradually decreased from its maximum value in the gain change amplitude of 100 to generate various predetermined gain points.

S104, at each set gain point, measuring the gamma energy spectrum separately and determining the characteristic peak channel address of the selected natural radionuclide.

During the gain-to-channel-address correlation calibration process, only one type of natural radionuclide is selected, which is one of the two types of natural radionuclides selected in the temperature-channel calibration process. Due to the special properties of the seawater radiation environment, the present embodiment selects the $^{40}K$ nuclide as the natural radionuclide selected for the gain-to-channel-address correlation calibration process.

Specifically, at each set gain point, using the seawater radioactivity sensor to measure the gamma energy spectrum, and the selection of the measurement time for each spectrum can be determined based on practical needs; in principle, it should be possible to accurately find the characteristic peak of the selected natural radionuclide in the gamma energy spectrum. For example, find the characteristic peak of the $^{40}K$ nuclide and determine its characteristic peak channel address.

To eliminate the influence of random errors in the experiment, multiple gamma energy spectrum measurements can be performed at each set gain point. In some embodiments of the present invention, 6 sets of experiments can be performed at each set gain point to obtain 6 sets of gamma energy spectrum data. Based on the average characteristic peak channel address of the selected natural radionuclide at each set gain point, the gain-to-channel-address correlation is established.

S105, when a gain change end condition is satisfied, fitting a gain-to-channel-address curve based on the established gain-to-channel-address correlation, and determining coefficients for the gain correction algorithm.

In the present embodiment, the gain change end condition can be set as follows: the gain change process terminates when the gain point being changed according to the gain change amplitude reaches the limit value of the gain of the sensor.

For example, the gain points increase from the minimum gain value of the sensor by a change amplitude of 100 until the maximum gain value of the sensor is reached and the gain change process is ended; or the gain points decrease from the maximum gain value of the sensor by a change amplitude of 100 until the minimum gain value of the sensor is reached and the gain change process is ended.

Following the completion of the gain change process, the gain-to-channel-address curve is fitted based on the established gain-to-channel-address correlation. In the present embodiment, the gain-to-channel-address curve is usually a linear function curve, i.e., a straight line, and the slope k of the straight line is calculated as one of the coefficients used in the subsequent gain correction algorithm.

The coefficient k is then integrated into the seawater radioactivity sensor to finalize the gain-to-channel-address correlation calibration process.

The temperature-to-channel-address correlation calibration process includes: submerging the seawater radioactivity sensor entirely into the temperature test chamber; performing gamma energy spectrum measurements at various temperatures by adjusting the temperature of the test chamber; identifying peaks in the gamma energy spectrum under different temperatures; determining the characteristic peak channel address of the selected natural radioactive nuclide under different temperatures; establishing both qualitative and quantitative relationships between the temperatures and the characteristic peak channel addresses, and then determining coefficients for the channel correction algorithm.

S201, placing the seawater radioactivity sensor into a temperature test chamber.

The temperature test chamber used in the present embodiment is a water bath temperature test chamber. Before the seawater radioactivity sensor is deployed, it is fully immersed in the water bath of the temperature test chamber, and a temperature measurement module is installed inside the seawater radioactivity sensor, placed in close contact with the surface of the sodium iodide crystal, to precisely monitor the real-time temperature of the measurement environment of the seawater radioactivity sensor.

S202, setting multiple temperature points and controlling the water bath temperature in the temperature test chamber so that the actual temperature of the measurement environment of the seawater radioactivity sensor reaches each designated temperature point.

To optimize the adaptation of the channel address correction algorithm to the actual temperature of the seawater environment when the seawater radioactivity sensor is in operation, the temperature adjustment range of the temperature test chamber is determined based on the actual seawater temperature variability, and the temperature change increment is set accordingly to establish at least 4 temperature points.

For example, if the temperature adjustment range is between -10°C and 50°C with a 5°C increment, it would result in 13 temperature points.

Among the set temperature points, a reference temperature should be included.

By adjusting the water bath temperature in the temperature test chamber, the actual temperature of the measurement environment of the seawater radioactivity sensor is set to each temperature point, as monitored by the temperature measurement module.

S203, at each designated temperature point, measuring the gamma energy spectrum by the seawater radioactivity sensor.

When adjusting the water bath temperature in the temperature test chamber to a set temperature point, factors such as the heat generation and thermal conduction of the seawater radioactivity sensor shell should be comprehensively considered, and the gamma energy spectrum measurement should be performed after the water bath temperature stabilizes for a specified duration.

In the present embodiment, the stabilization period of the water bath temperature can be set to at least 1 hour to ensure that the environmental temperature of the seawater radioactivity sensor is steady before taking the gamma energy spectrum measurements. The duration of each gamma energy spectrum measurement by the seawater radioactivity sensor is determined based on a short-term duration set when the seawater radioactivity sensor is in operation, for example, it can be set to 1 hour.

To eliminate the influence of random errors in the experiment, multiple gamma energy spectrum measurements can be performed at each set temperature point. In some preferred embodiments, 6 sets of experiments can be performed at each set temperature point to obtain 6 sets of gamma energy spectrum data.

S204, performing peak searching on the gamma spectra measured by the seawater radioactivity sensor at different temperatures, and determining the characteristic peak channel address of the selected natural radionuclide in the gamma spectra at different temperatures.

In the present embodiment, in order to improve the accuracy of the measurement of the characteristic peak channel address, the characteristic peak channel address of the selected natural radionuclides can be determined separately from multiple measurements at each set temperature point, and the average of the multiple determined characteristic peak channel addresses can be calculated and used as the characteristic peak channel address of the selected natural radionuclide at the temperature point.

In the present embodiment, the characteristic peak channel address of the selected natural radionuclide at the reference temperature (e.g. 25°C) can be recorded as $PE_R$, and the characteristic peak channel address of the selected natural radionuclide at other temperature points (i.e. not at the reference temperature) can be recorded as $PE_T$, wherein $PE_R$ and $PE_T$ both represent the average value of the characteristic peak channel addresses.

To enhance the precision of gamma energy spectrum correction, the present embodiment selects two natural radionuclides and calculates the characteristic peak channel address $PE_R$ and $PE_T$ of the two natural radionuclides at different set temperature points.

To ensure accurate peak channel address correction algorithm across the entire spectral range, two natural radionuclides should be selected such that one has a relatively lower channel and the other has a relatively higher channel within the entire channel range of the gamma energy spectrum. For example, for a spectrum with a range of 1-1024 channels, one natural radionuclide can be selected such that its accurate characteristic peak channel address at the reference temperature is before the channel 450, and the other natural radionuclide can be selected such that its accurate characteristic peak channel address at the reference temperature is after the channel 700.

In some preferred embodiments of the present invention, $^{40}$K with characteristic peak channel address of 400 and $^{208}$Tl with characteristic peak channel address of 712 can be selected as the two natural radionuclides at the reference temperature. These two natural radionuclides are widely and abundantly present in the natural environment and can form obvious characteristic peaks in the gamma energy spectrum.

When performing peak searching on the multiple gamma spectra obtained by a seawater radioactivity sensor at different temperatures, it should determine the characteristic peak channel address of $^{40}$K and $^{208}$Tl separately in each gamma energy spectrum obtained at the same temperature point. At the same temperature point, the characteristic peak channel address of $^{40}$K and the characteristic peak channel address of $^{208}$Tl are the average value of the characteristic peak channel address obtained by multiple measurements at the temperature point, represented by $PE_{R\_K}$, $PE_{T\_K}$, $PE_{R\_Tl}$ and $PE_{T\_Tl}$ respectively, wherein $PE_{R\_K}$ and $PE_{R\_Tl}$ represent the characteristic peak channel address of $^{40}$K and $^{208}$Tl at the reference temperature, respectively, and the $PE_{T\_K}$ and $PE_{T\_Tl}$ represent the characteristic peak channel address of $^{40}$K and $^{208}$Tl at other temperature points apart from the reference temperature, respectively.

S205, establishing a correlation between the characteristic peak channel address $PE_T$ of selected natural radionuclides at different temperatures and the temperatures T.

A temperature-to-channel-address correlation is established based on the set temperature points and the characteristic peak channel address $PE_T$ of the selected natural radionuclide at each temperature point. In the present embodiment, for the case of the selected natural radionuclides $^{40}$K and $^{208}$Tl, the temperature-to-channel-address correlation can be established for $^{40}$K and $^{208}$Tl, respectively.

S206, establishing a temperature correction function and determining the calibration coefficients in the temperature correction function based on the established temperature-to-channel-address correlation.

The temperature correction function is typically fitted using a polynomial relationship, such as first, second, or higher order. In the present embodiment, a third-order polynomial function is used. Specifically, the function can be established by fitting the ratio of the average characteristic peak channel addresses at temperatures other than the reference temperature to that at the reference temperature, combined with the temperatures, to establish the temperature correction function and determine the specific calibration coefficients values of the temperature correction function of a particular seawater radioactivity sensor.

In the present embodiment, the temperature correction function established is:

$$f(T) = \frac{PE_T}{PE_R} = p_0 + p_1 T + p_2 T^2 + p_3 T^3$$

wherein f(T) represents the temperature correction function; $PE_R$ represents the channel address of the characteristic peak of the selected natural nuclide at the reference temperature, and $PE_T$ is the channel address of the characteristic peak of the selected natural nuclide at temperature points other than the reference temperature; T represents temperatures, and in the function it represents the temperature points other than the reference temperature; $p_0$, $p_1$, $p_2$, $p_3$ are the calibration coefficients.

To improve the accuracy of the channel address correction algorithm, for the case where two types of natural radionuclides are selected, the temperature-to-channel-address correlation established for each of the two types of natural radionuclides is individually applied to the temperature correction function f(T), and two sets of the calibration coefficients are calculated. The average value of the two sets of the calibration coefficients is then taken as the calibration coefficients $p_0$, $p_1$, $p_2$, $p_3$.

Specifically, for the case where the two types of natural radionuclides are $^{40}$K and $^{208}$Tl, first based on the temperature-to-channel-address correlation established for the radionuclide $^{40}$K, the characteristic peak channel addresses $PE_{R\_K}$, $PE_{T\_K}$ of the radionuclide $^{40}$K and the remaining 12 temperature points T are applied to the temperature correction function f(T):

$$f(T) = \frac{PE_{T\_K}}{PE_{R\_K}} = p_{0k} + p_{1k} T + p_{2k} T^2 + p_{3k} T^3$$

and thus form 12 sets of quartic equations, which are used to fit the values of the calibration coefficients $p_{0k}$, $p_{1k}$, $p_{2k}$, $p_{3k}$.

Then based on the temperature-to-channel-address correlation established for the radionuclide $^{208}$Tl, the characteristic peak channel addresses $PE_{R\_Tl}$ and $PE_{T\_Tl}$ of the radionuclide $^{208}$Tl and the remaining 12 temperature points T are applied to the temperature correction function f(T):

$$f(T) = \frac{PE_{T\_Tl}}{PE_{R\_Tl}} = p_{0Tl} + p_{1Tl}T + p_{2Tl}T^2 + p_{3Tl}T^3$$

and thus form 12 sets of quartic equations, which are used to fit the values of the calibration coefficients $p_{0Tl}$, $p_{1Tl}$, $p_{2Tl}$, $p_{3Tl}$.

Using the following formula to calculate the average value, and the calibration coefficients $p_0$, $p_1$, $p_2$, $p_3$ are calculated:

$$p_i = \frac{1}{2} \cdot (p_{iK} + p_{iTl}) \; ; \; i=0,1,2,3$$

that is:

$$p_0 = \frac{1}{2} \cdot (p_{0K} + p_{0Tl}) \; ; \; p_1 = \frac{1}{2} \cdot (p_{1K} + p_{1Tl}) \; ; \; p_2 = \frac{1}{2} \cdot (p_{2K} + p_{2Tl}) \; ; \; p_3 = \frac{1}{2} \cdot (p_{3K} + p_{3Tl})$$

Therefore, a cubic polynomial temperature correction function f(T) with temperature T as the variable can be determined.

The above process outlines the temperature-to-channel-address correlation calibration and the establish of the temperature correction functionf(T), which are required before the seawater radioactivity sensor is put into use.

Since the influence of the same temperature change on different channel addresses has the same proportional relationship, i.e., the greater the channel address, the larger the value change with temperature, and vice versa. Hence, the gamma energy spectrum with temperature drift can be corrected using the following relationship, that is, all channel addresses of the drifted gamma energy spectrum are recalculated as follows:

$$CH_{TC} = \frac{CH_T}{f(T)}$$

where $CH_{TC}$ represents all the channel addresses after the drifted gamma energy spectrum is corrected at the temperature T, namely the correction value for the channel address; $CH_T$ represents all the channel addresses before the drifted gamma energy spectrum is corrected.

By substituting the determined temperature correction function f(T) into the above channel address correction formula, the final channel address correction algorithm formula is obtained:

$$CH_{TC} = \frac{CH_T}{p_0 + p_1T + p_2T^2 + p_3T^3}$$

where $p_0$, $p_1$, $p_2$, $p_3$ are known constants.

The channel correction algorithm formula is then incorporated into the seawater radioactivity sensor so that it can be used during the channel address correction process performed by the sensor.

After the seawater radioactivity sensor is put into normal operation, the gain correction algorithm and the channel correction algorithm can be used to perform in-situ, real-time temperature drift correction on the gamma energy spectrum measured by the sensor, thereby outputting the corrected, accurate gamma energy spectrum.

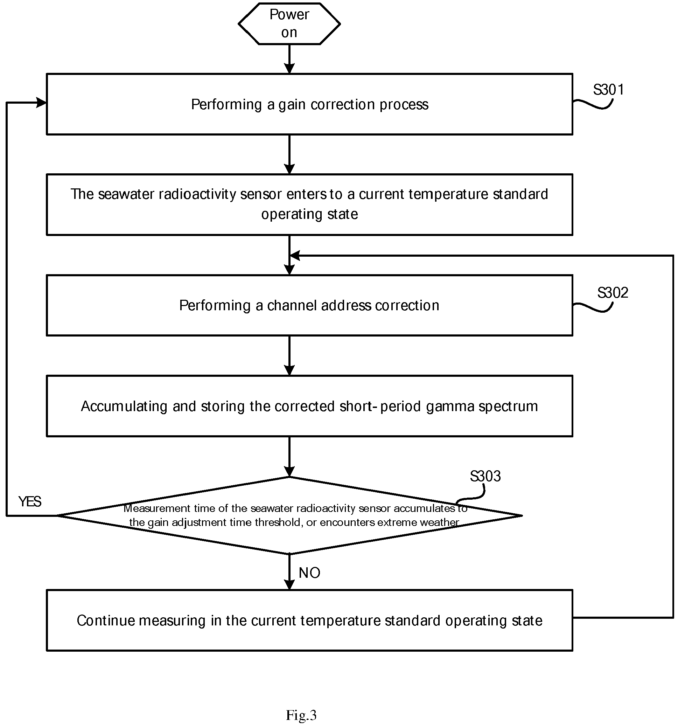

The specific process is shown in Fig. 3 and can include the following steps:

S301: performing a gain correction process to calibrate the seawater radioactivity sensor to a current temperature standard operating state.

It includes: deploying the seawater radioactivity sensor, which already includes the gain correction and channel address correction algorithm, into the seawater to be tested; after turning it on, first performing a gain correction process to calibrate the sensor to the current temperature standard operating state.

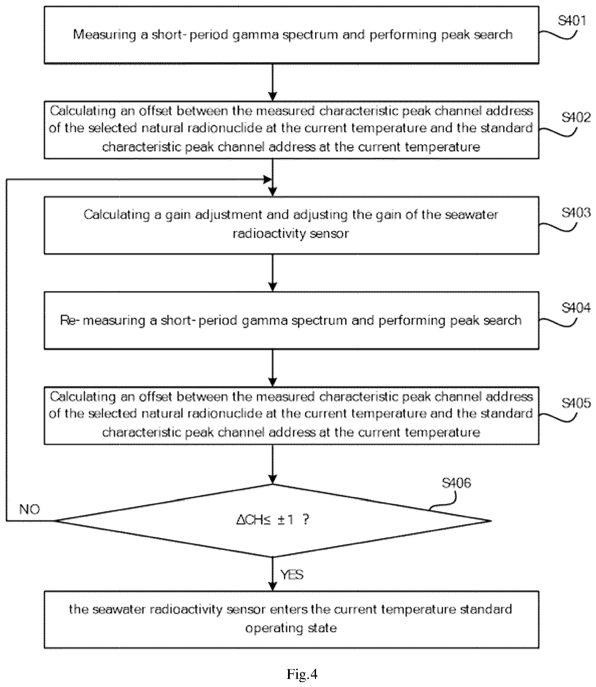

The gain correction process in this embodiment can include the following steps, as shown in Fig. 4:

S401: measuring a short-period gamma energy spectrum and performing peak search.

It includes: setting a short period, such as 1 hour, during which the seawater radioactivity sensor measures the gamma energy spectrum of the seawater to be tested and identifying the characteristic peak channel address of the selected natural radionuclide from the measured gamma energy spectrum. The selected natural radionuclide is the one chosen during the gain-to-channel-address correlation calibration process, for example, the $^{40}$K nuclide.

S402: calculating an offset between the measured characteristic peak channel address of the selected natural radionuclide at the current temperature and the standard characteristic peak channel address at the current temperature.

Here, the measured characteristic peak channel address at the current temperature is the channel address obtained by actual measurement and peak search in seawater. The standard characteristic peak channel address at the current temperature is the characteristic peak channel address at the same temperature in the temperature-to-channel-address correlation.

The measured characteristic peak channel address of the selected natural radionuclide (e.g., $^{40}$K nuclide) at the current temperature as $P_s$ and the standard characteristic peak channel address at the current temperature is denoted as $P_R$, then the channel address offset is calculated by:

$$\Delta CH = P_s - P_R$$

S403: calculating a gain adjustment and adjusting the gain of the seawater radioactivity sensor.

In the present embodiment, a correlation between the gain adjustment amount and the characteristic peak channel address offset is given by:

$$\frac{\Delta GA}{\Delta CH} = -\frac{1}{k}$$

Where $\Delta GA$ is the gain adjustment amount, k is a known value, i.e., the slope of the fitted curve determined during the gain-to-channel-address correlation calibration.

Thus, the gain adjustment amount can be calculated as:

$$\Delta GA = -\frac{1}{k} \cdot \Delta CH = -\frac{1}{k} \cdot (P_s - P_R)$$

If $\Delta GA$ is positive, the gain of the seawater radioactivity sensor should be increased; if $\Delta GA$ is negative, the gain of the seawater radioactivity sensor should be decreased.

S404: Re-measuring a short-period gamma energy spectrum and performing peak search.

It includes: after adjusting the gain, re-measuring the gamma energy spectrum within a short period and identifying the characteristic peak channel address of the selected natural radionuclide (e.g., the $^{40}$K nuclide).

S405: calculating an offset between the measured characteristic peak channel address of the selected natural radionuclide at the current temperature and the standard characteristic peak channel address at the current temperature.

This step is executed as per the Step S402.

S406: determining whether to end the gain correction process based on the offset between the measured characteristic peak channel address of the selected natural radionuclide at the current temperature and the standard characteristic peak channel address at the current temperature.

In the present embodiment, if the offset $\Delta CH$ between the measured characteristic peak channel address of the selected natural radionuclide at the current temperature and the standard characteristic peak channel address at the current temperature is greater than $\pm 1$ channel, which is measured after the seawater radioactivity sensor through the gain correction process, returning to Step S403 and recalculating the gain adjustment $\Delta GA$, and then further adjusting the gain of the seawater radioactivity sensor. If the offset $\Delta CH$ is less than or equal to $\pm 1$ channel, the gain correction process ends, and the sensor enters the current temperature standard operating state.

S302: performing a channel address correction to obtain corrected gamma energy spectrum data.

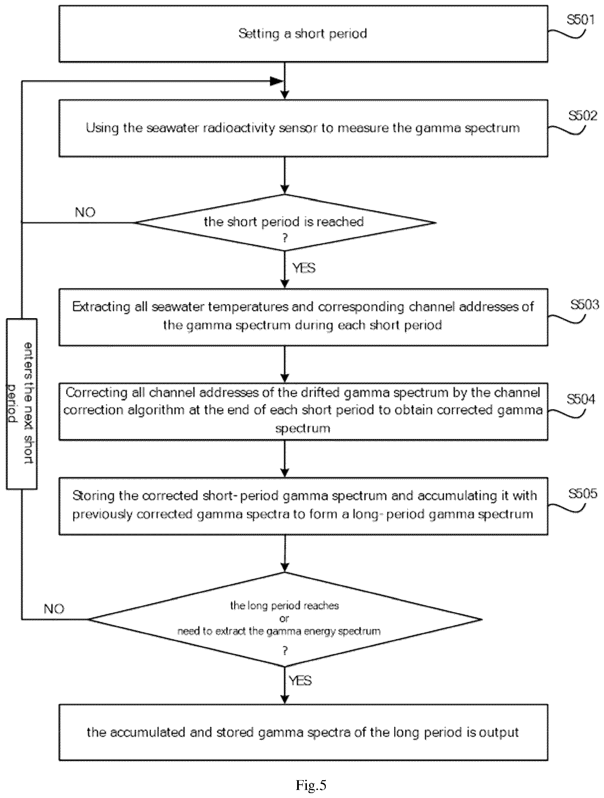

The channel address correction process in this embodiment can include the following steps, as shown in Fig.5.

S501: setting a short period.

It includes: when the seawater radioactivity sensor operates in situ at sea, dividing the long measurement period into several equal short periods, such as 1 hour. The short period should ideally match the measurement time used during the temperature-to-channel-address correlation calibration to ensure the applicability of the correction algorithm and improve the accuracy of the correction results.

S502: using the seawater radioactivity sensor to measure the gamma energy spectrum.

It includes: using the sodium iodide crystal-based detection method to measure the gamma energy spectrum of the seawater to be tested. The temperature measurement module inside the seawater radioactivity sensor automatically measures and records the real-time temperature of the seawater.

S503: extracting all seawater temperatures and corresponding channel addresses of the gamma energy spectrum during each short period.

The seawater temperature measured by the seawater radioactivity sensor during the short period may vary slightly. To make the short period temperature more representative, take the average temperature of the short period as the seawater temperature T. For example, the average temperature of the temperature at the beginning, middle and end of the short period could be used as the seawater temperature T of the short period.

According to the short period time threshold set based on the actual working seawater temperature changes, automatically record the gamma energy spectrum measurement data and all corresponding channel addresses for each short period when the threshold is reached.

S504: correcting all channel addresses of the drifted gamma energy spectrum by the channel correction algorithm at the end of each short period to obtain corrected gamma energy spectrum.

At the end of each short period, using the channel correction algorithm formula embedded in the seawater radioactivity sensor:

$$CH_{TC} = \frac{CH_T}{p_0 + p_1 T + p_2 T^2 + p_3 T^3}$$

to calculate the correction values for all channel addresses; in which T is the average seawater temperature during the short period; $CH_T$ and $CH_{TC}$ represents all the channel addresses before the drifted gamma energy spectrum is corrected and all the channel addresses after the drifted gamma energy spectrum is corrected, respectively.

After correcting all channel addresses of the drifted gamma energy spectrum, a corrected gamma energy spectrum is obtained.

S505: storing the corrected short-period gamma energy spectrum and accumulating it with previously corrected gamma spectra to form a long-period gamma energy spectrum.

It includes: at the end of each short period, storing the corrected gamma energy spectrum for that short period and automatically accumulating it with previously corrected short-period gamma spectra in chronological order to generate a long-period continuous, accurately corrected gamma energy spectrum.

S303: when the measurement time of the seawater radioactivity sensor accumulates to the gain adjustment time threshold, or encounters extreme weather, returning to Step S301, and re-performing the gain correction process to recalibrate the seawater radioactivity sensor to the current temperature standard operating state; and then performing the channel address correction process again.

In the present embodiment, the gain adjustment time threshold for cumulative measurement time can be set to 7 days or determined based on actual conditions. Extreme weather can include sudden temperature changes, heavy rainfall, strong winds, and waves, which can be automatically identified using detection data from various sensors installed on the buoy (where the seawater radioactivity sensor is mounted).

When the measurement time of the seawater radioactivity sensor accumulates to the gain adjustment time threshold, or encounters extreme weather, the measured spectrum at current temperature can be considered to have deviated significantly from the standard spectrum at current temperature, that is to say, the measured characteristic peak channel address of the selected natural radionuclide at the current temperature has significantly deviated from the standard characteristic peak channel address; hence, the seawater radioactivity sensor can then automatically perform a gain correction process to recalibrate to the current temperature standard operating state before continuing spectrum measurement.

If the continuous working time does not reach the set threshold and no extreme weather occurs, the sensor does not need to perform a gain correction process and can continue measuring in the current temperature standard operating state, and executing the channel address correction process.

When the measurement task of the seawater radioactivity sensor is completed or gamma spectra need to be extracted, the accumulated and stored gamma spectra can be used to obtain the corrected long-period gamma energy spectrum, meeting the needs of spectrum analysis.

The temperature drift correction method for the gamma energy spectrum measured by the seawater radioactivity sensor in this embodiment does not require introducing a reference source. After completing the gain-to-channel-address correlation calibration, the gain correction method only requires peak searching for the $^{40}$K nuclide in the seawater gamma energy spectrum. The gain correction can be completed by calculating and adjusting the sensor gain using the gain correction algorithm. After completing the temperature-to-channel-address correlation calibration, the channel correction method only relates to the actual temperature T of the measurement environment, without peak searching for the drifted gamma energy spectrum. By directly using the channel correction algorithm to recalculate the channels of the drifted gamma energy spectrum, the channel correction can be completed. Combining the gain correction method and the channel correction method ensures the validity and accuracy of the gamma spectra output by the seawater radioactivity sensor during long-term sea operation.

Of course, the above description is only a preferred embodiment of the present invention. It should be noted that those skilled in the art can make several improvements and modifications without departing from the principles of the present invention. These improvements and modifications should also be considered within the scope of the present invention.

**Claims**

1. A seawater gamma energy spectrum temperature drift correction method combining gain adjustment and periodicity, **characterized in that** it comprises:

prior to deploying a seawater radioactivity sensor, based on selected natural nuclide, using gamma energy spectrum measurement and peak search to perform a gain-to-channel-address correlation calibration and a temperature-to-channel-address correlation calibration, and establishing a gain-to-channel-address correlation and a temperature-to-channel-address correlation, respectively;

after the seawater radioactivity sensor is deployed, performing a gain correction process and a channel address correction process, wherein:

the gain correction process includes:

measuring a short-period gamma energy spectrum and performing peak search;

calculating an offset between the measured characteristic peak channel address of the selected natural radionuclide at the current temperature and the standard characteristic peak channel address at the current temperature, and determining a gain adjustment based on the a gain-to-channel-address correlation;

according to the gain adjustment, the gain of the seawater radioactivity sensor is adjusted to bring the seawater radioactivity sensor to a current temperature standard operating state ;

the channel address correction process includes:

during each set short period, using the seawater radioactivity sensor to measure the gamma energy spectrum of the seawater to be tested;

at the end of each short period, extracting the seawater temperature measured by the seawater radioactivity sensor and all the channel addresses $CH_T$ from the gamma energy spectrum during the short period ;

calculating the correction values for all the channel addresses $CH_{TC}$ by :

$$CH_{TC} = \frac{CH_T}{p_0 + p_1 T + p_2 T^2 + p_3 T^3};$$

wherein $p_0$, $p_1$, $p_2$, $p_3$ are calibration coefficients; T represents temperature;

storing the corrected short-period gamma energy spectrum, and sequentially accumulating it with the previously corrected short-period gamma energy spectrum in chronological order, thereby obtaining a long-period gamma energy spectrum in which the temperature drift is eliminated.

when the measurement time accumulates to reach a gain adjustment time set threshold or encounters extreme weather, re-performing the gain correction process to make the seawater radioactivity sensor re-enter the current temperature standard operating state, and then performing the channel address correction process.

2. The seawater gamma energy spectrum temperature drift correction method combining gain adjustment and periodicity according to claim 1, **characterized in that** in the gain correction process,

the offset of the channel address $\Delta CH$ can be calculated by:

$$\Delta CH = P_s - P_R$$

where $P_s$ is the measured characteristic peak channel address of the selected natural radionuclide at the current temperature, and $P_R$ is the standard characteristic peak channel address of the selected natural nuclide at the current temperature, and the standard characteristic peak channel addresses at different temperatures are determined by the temperature-to-channel-address correlation;
the gain adjustment amount $\Delta GA$ is calculated by:

$$\Delta GA = -\frac{1}{k}$$

where k is determined by the gain-to-channel-address correlation.

3. The seawater gamma energy spectrum temperature drift correction method combining gain adjustment and periodicity according to claim 2, **characterized in that** the gain-to-channel-address correlation calibration includes:

placing the seawater radioactivity sensor in a water bath temperature test chamber entirely;
controlling the temperature of the temperature test chamber to stabilize the actual temperature of the measurement environment of the seawater radioactivity sensor at the reference temperature, wherein the environmental temperature during the energy calibration of the seawater radioactivity sensor;
gradually increasing or decreasing the gain of the seawater radioactivity sensor based on a predetermined gain change; at each set gain point, measuring the gamma energy spectrum separately and determining the characteristic peak channel address of the selected natural radionuclide until the gain of the sensor reaches its limit value;
based on the set gain points and corresponding characteristic peak channel addresses, establishing the gain-to-channel-address correlation and fitting out the gain-to-channel-address curve.

4. The seawater gamma energy spectrum temperature drift correction method combining gain adjustment and periodicity according to claim 3, **characterized in that** the gain-to-channel-address curve obtained by fitting through the gain-to-channel-address correlation is a straight line; the slope of the line is denoted as k, which is used for calculating the gain adjustment amount.

5. The seawater gamma energy spectrum temperature drift correction method combining gain adjustment and periodicity according to claim 3, **characterized in that** multiple gamma energy spectrum measurements is performed using the seawater radioactivity sensor at the gain point for the selected natural nuclide; and the average of the channel addresses of the characteristic peak of the selected natural nuclide in multiple gamma energy spectrum measurements is calculated as the characteristic peak channel address of the gain point.

6. The seawater gamma energy spectrum temperature drift correction method combining gain adjustment and periodicity according to claim 3, **characterized in that** during the gain-to-channel-address correlation calibration process, the selected natural nuclide is the $^{40}$K nuclide present in the potassium element.

7. The seawater gamma energy spectrum temperature drift correction method combining gain adjustment and periodicity according to any one from claim 1 to 6, **characterized in that** the temperature-to-channel-address correlation calibration process comprises:

placing the seawater radioactivity sensor entirely inside a water bath temperature test chamber;
adjusting the temperature of the temperature test chamber so that the actual temperature of the measurement environment of the seawater radioactivity changes in equal gradients within a preset temperature adjustment range, forming at least four temperature points and one of them is a reference temperature; the aforementioned reference temperature is the environmental temperature of the seawater radioactivity sensor during energy calibration;
performing peak search on the gamma spectra measured by the seawater radioactivity sensor at different temperatures to find the channel addresses of the characteristic peaks of the selected natural nuclide in the gamma spectra at different temperatures; and
establishing a temperature-to-channel-address correlation using the set temperature points and the corresponding channel addresses.

8. The seawater gamma energy spectrum temperature drift correction method combining gain adjustment and periodicity according to claim 7, **characterized in that** the calibration coefficients is determined by:

using the established temperature-to-channel-address correlation, substitute different temperatures and their corresponding channel addresses into a temperature correction function f(T) to calculate the calibration coefficients $p_0$, $p_1$, $p_2$, $p_3$:

$$f(T) = \frac{PE_T}{PE_R} = p_0 + p_1 T + p_2 T^2 + p_3 T^3$$

wherein $PE_R$ is the channel address of the characteristic peak of the selected natural nuclide at the reference temperature, and $PE_T$ is the channel address of the characteristic peak of the selected natural nuclide at temperature points T other than the reference temperature.

9. The seawater gamma energy spectrum temperature drift correction method combining gain adjustment and periodicity according to claim 8, **characterized in that** in the temperature-to-channel-address correlation calibration process, two natural nuclides are selected; at each set temperature point, multiple gamma energy spectrum measurements are performed using the seawater radioactivity sensor and the average channel addresses of the characteristic peaks of the two selected natural nuclides in multiple gamma energy spectrum measurements are calculated separately; using the average channel addresses of the characteristic peaks of the selected natural nuclide at different temperature to establish the temperature-to-channel-address correlations, and the two correlations are substituted into the temperature correction function f(T) separately to calculate two sets of calibration coefficients; the average value of the two sets of calibration coefficients are taken as the $p_0$, $p_1$, $p_2$, $P_3$.

10. The seawater gamma energy spectrum temperature drift correction method combining gain adjustment and periodicity according to claim 9, **characterized in that** for a spectrum with a range of 1-1024 channels, one natural nuclide have an accurate channel address value of its characteristic peak at the reference temperature before channel address 450; the other natural nuclide have an accurate channel address value of its characteristic peak at the reference temperature after channel address 700.

11. The seawater gamma energy spectrum temperature drift correction method combining gain adjustment and periodicity according to claim 10, **characterized in that** in the temperature-to-channel-address correlation calibration process, the two natural nuclides selected are the $^{40}$K nuclide in potassium and the $^{208}$Tl nuclide in thallium.

12. The seawater gamma energy spectrum temperature drift correction method combining gain adjustment and periodicity according to claim 1, **characterized in that** when extracting the seawater temperature measured by the seawater radioactivity sensor at the end of each short period, the seawater temperature is the average value of the seawater temperatures measured by the seawater radioactivity sensor during that short period.

Placing a seawater radioactivity sensor into a temperature test chamber — S101

Controlling the temperature of the temperature test chamber to stabilize the actual temperature of the measurement environment of the seawater radioactivity sensor at a reference temperature — S102

Gradually increasing or decreasing the gain of the seawater radioactivity sensor based on a predetermined gain change amplitude — S103

At each set gain point, measuring the gamma spectrum separately and determining the characteristic peak channel address of the selected natural radionuclide — S104

S105

No — A gain change end condition is satisfied

Yes

Establishing a gain-to-channel-address correlation, fitting a gain-to-channel-address curve and determining coefficients for a gain correction algorithm

Fig.1

Placing the seawater radioactivity sensor into a temperature test chamber — S201

Setting multiple temperature points and controlling the water bath temperature in the temperature test chamber so that the actual temperature of the measurement environment of the seawater radioactivity sensor reaches each designated temperature point — S202

At each designated temperature point, measuring the gamma spectrum by the seawater radioactivity sensor — S203

Performing peak searching on the gamma spectra measured by the seawater radioactivity sensor at different temperatures, and determining the characteristic peak channel address of the selected natural radionuclide in the gamma spectra at different temperatures — S204

Establishing a correlation between the characteristic peak channel address of selected natural radionuclides at different temperatures and the temperatures T — S205

Establishing a temperature correction function and determining the calibration coefficients in the temperature correction function based on the established temperature-to-channel-address correlation — S206

Fig.2

```
                          ┌─────────┐
                          │  Power  │
                          │   on    │
                          └────┬────┘
                               │
                               ▼
   ┌──────────────────────────────────────────────────────────────┐   S301
   │           Performing a gain correction process               │
   └──────────────────────────────┬───────────────────────────────┘
                                   │
                                   ▼
   ┌──────────────────────────────────────────────────────────────┐
   │  The seawater radioactivity sensor enters to a current        │
   │             temperature standard operating state              │
   └──────────────────────────────┬───────────────────────────────┘
                                   │
                                   ▼
   ┌──────────────────────────────────────────────────────────────┐   S302
   │           Performing a channel address correction            │
   └──────────────────────────────┬───────────────────────────────┘
                                   │
                                   ▼
   ┌──────────────────────────────────────────────────────────────┐
   │   Accumulating and storing the corrected short-period         │
   │                      gamma spectrum                           │
   └──────────────────────────────┬───────────────────────────────┘
                                   │
                                   ▼
                                                            S303
 YES        ◇────────────────────────────────────────────◇
   ◄────────  Measurement time of the seawater radioactivity
              sensor accumulates to the gain adjustment time
              threshold, or encounters extreme weather
            ◇────────────────────────────────────────────◇
                                   │ NO
                                   ▼
   ┌──────────────────────────────────────────────────────────────┐
   │  Continue measuring in the current temperature standard       │
   │                      operating state                          │
   └──────────────────────────────────────────────────────────────┘
```

Fig.3

Measuring a short-period gamma spectrum and performing peak search — S401

Calculating an offset between the measured characteristic peak channel address of the selected natural radionuclide at the current temperature and the standard characteristic peak channel address at the current temperature — S402

Calculating a gain adjustment and adjusting the gain of the seawater radioactivity sensor — S403

Re-measuring a short-period gamma spectrum and performing peak search — S404

Calculating an offset between the measured characteristic peak channel address of the selected natural radionuclide at the current temperature and the standard characteristic peak channel address at the current temperature — S405

S406

NO — $\Delta CH \leq \pm 1$ ?

YES

the seawater radioactivity sensor enters the current temperature standard operating state

Fig.4

18

Fig.5

## INTERNATIONAL SEARCH REPORT

| International application No. |
| --- |
| **PCT/CN2022/126553** |

**A. CLASSIFICATION OF SUBJECT MATTER**

G01T7/00(2006.01)i; G01T1/167(2006.01)i; G01T1/202(2006.01)i; G01T1/36(2006.01)i

According to International Patent Classification (IPC) or to both national classification and IPC

**B. FIELDS SEARCHED**

Minimum documentation searched (classification system followed by classification symbols)

IPC:G01T

Documentation searched other than minimum documentation to the extent that such documents are included in the fields searched

Electronic data base consulted during the international search (name of data base and, where practicable, search terms used)

CNTXT, CNKI, ENTXTC, ENTXT: 增益, 放射, 漂, 温度, 校正, 寻峰, 道址, 伽马, 曲线, 标定, gain, radiation, drift, temperature, correct+, peak find+, access, gamma, curve, calibrat+

**C. DOCUMENTS CONSIDERED TO BE RELEVANT**

| Category* | Citation of document, with indication, where appropriate, of the relevant passages | Relevant to claim No. |
| --- | --- | --- |
| A | CN 105572715 A (INSTITUTE OF OCEANOGRAPHIC INSTRUMENTATION, SHANDONG ACADEMY OF SCIENCES) 11 May 2016 (2016-05-11) description, paragraphs [0005]-[0011], and figure 3 | 1-12 |
| A | CN 108042148 A (JIANGSU SAINUO GELAN MEDICAL SCIENCE & TECHNOLOGY CO., LTD.) 18 May 2018 (2018-05-18) entire document | 1-12 |
| A | CN 112684491 A (BEIJING CENTURY SCIENCE & TECHNOLOGY GROUP et al.) 20 April 2021 (2021-04-20) entire document | 1-12 |
| A | CN 112882085 A (MINFOUND MEDICAL SYSTEMS CO., LTD.) 01 June 2021 (2021-06-01) entire document | 1-12 |
| A | EP 3492950 A1 (COMMISSARIAT ENERGIE ATOMIQUE) 05 June 2019 (2019-06-05) entire document | 1-12 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 June 2023** | **21 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/126553**

**C.    DOCUMENTS CONSIDERED TO BE RELEVANT**

| Category* | Citation of document, with indication, where appropriate, of the relevant passages | Relevant to claim No. |
|---|---|---|
| A | US 5360975 A (SCHLUMBERGER TECHNOLOGY CORP.) 01 November 1994 (1994-11-01)<br>    entire document | 1-12 |

Form PCT/ISA/210 (second sheet) (July 2022)

**INTERNATIONAL SEARCH REPORT**
Information on patent family members

| International application No. |
| --- |
| **PCT/CN2022/126553** |

| Patent document cited in search report | | | Publication date (day/month/year) | Patent family member(s) | | | Publication date (day/month/year) |
| --- | --- | --- | --- | --- | --- | --- | --- |
| CN | 105572715 | A | 11 May 2016 | None | | | |
| CN | 108042148 | A | 18 May 2018 | None | | | |
| CN | 112684491 | A | 20 April 2021 | None | | | |
| CN | 112882085 | A | 01 June 2021 | None | | | |
| EP | 3492950 | A1 | 05 June 2019 | FR | 3074585 | A1 | 07 June 2019 |
| | | | | FR | 3074585 | B1 | 03 January 2020 |
| | | | | EP | 3492950 | B1 | 21 July 2021 |
| US | 5360975 | A | 01 November 1994 | DK | 0621494 | T3 | 27 December 1999 |
| | | | | EP | 0621494 | A1 | 26 October 1994 |
| | | | | EP | 0621494 | B1 | 09 June 1999 |

Form PCT/ISA/210 (patent family annex) (July 2022)